# EUROPEAN PATENT SPECIFICATION

(11) **EP 2 794 516 B1**
(45) Date of publication and mention of the grant of the patent: **08.03.2017**
(21) Application number: 12806482.1
(22) Date of filing: 20.12.2012
(51) Int. Cl.: C05F 1/00, C05F 11/00, C05D 9/02, C05G 3/00

(54) **COMPOSITION FOR INCREASING LITHIUM AND SELENIUM CONTENT IN VEGETABLES AND THEIR PROCESSED PRODUCTS AND USE THEREOF**
ZUSAMMENSETZUNG ZUR ERHÖHUNG DES LITHIUM- UND SELENGEHALTS IN PFLANZEN SOWIE DEREN VERARBEITETEN PRODUKTEN UND VERWENDUNG DAVON
COMPOSITION DESTINÉE À AUGMENTER LA TENEUR EN LITHIUM ET EN SÉLÉNIUM DANS LES LÉGUMES ET LES PRODUITS TRANSFORMÉS À PARTIR DE CEUX-CI ET UTILISATION DE CELLE-CI

(30) Priority: 23.12.2011 IT BO20110759
(43) Date of publication of application: 29.10.2014
(73) Proprietor: I. D. Tech S.r.l., 40139 Bologna (IT)
(72) Inventor: PIFFERI, Piergiorgio, I-40139 Bologna (IT)
(74) Representative: Negrini, Elena
(86) International application number: PCT/EP2012/076474
(87) International publication number: WO 2013/092907

(56) References cited:
- EP-A2- 0 864 257
- EP-A2- 1 153 901
- WO-A1-89/04599
- CH-A5- 694 263
- FR-A1- 2 289 469
- FR-A1- 2 904 184
- US-A1- 2010 326 153
- DATABASE BIOSIS [Online] BIOSCIENCES INFORMATION SERVICE, PHILADELPHIA, PA, US; May 2010 (2010-05), KINRAIDE THOMAS B ET AL: "Interactive intoxicating and ameliorating effects of tannic acid, aluminum (Al3+), copper (Cu2+), and selenate (SeO42-) in wheat roots: a descriptive and mathematical assessment", XP002693789, Database accession no. PREV201000319533 & PHYSIOLOGIA PLANTARUM, vol. 139, no. 1, May 2010 (2010-05), pages 68-79, ISSN: 0031-9317, DOI: 10.1111/J.1399-3054.2010.01347.X

## Description

### Technical Field

The present invention relates to vegetables (fruits, tubers, horticultural and bulbs) treatments for increasing their nutritional value and the ones of their processed products (e.g. drinks, juices, conserves, extracts, etc....) in order to better promote human health.

In particular the object of the present invention is a composition for increasing primarily the nutritional quality of plants and their processed products by increasing lithium and selenium content: in fruit crops such as grapes, apples, pears, oranges, pomegranates, apricots, kiwi, cherries, sour cherries, olives, almonds, lemons, plums, in vegetable crops such as tomatoes, carrots, onions, chicories, artichokes, lettuces, potatoes, squashes, winter cauliflowers, spinaches, chards, fennels, asparagus, mushrooms, in herbs plants and spices such as arugula or salad rocket, rosemary, basil, sage, bay leaf, oregano, ginger, turmeric, thyme and at the same time for modulating and increasing the lithium and selenium absorption rate of the plant, by means of a composition containing adjuvants defined components, of natural origin and not produced by organic chemistry synthesis.

### Background Art

It's well known that foods, especially plants, brings to human diet nutrients having functional properties for regulating biochemical processes and that are recommended for the good health promotion if assumed in the right doses.

LARN publications suggest a daily intake of 50µg (micrograms) of selenium (Livelli di Assunzione Raccomandati di energia e Nutrienti per la popolazione italiana, edizione 1996).

Other publications suggest selenium as essential mineral to be taken in daily doses from 50 to 70µg/day (Committee on Dietary Allowances, Recommended Dietary Allowances, 11th revised ed. U.S. GPO, Washington DC, 1989).

It's well known and supported by epidemiological, pre-clinical and clinical studies, that selenium composites are strong chemo-preventive agents against cancer.

The selenium intake has been recognized as effective in reducing the tumours incidence, including prostate, lung, colon and liver cancer.

In addition the selenium incorporation in plants enhances the antioxidant activity of aqueous extracts as reported for green tea, rice, mushrooms, and it was also marketed a selenium enriched functional foods variety, such as garlic, yeast, green tea, seaweed, rice and potatoes, to provide selenium in human diet.

In addition to perform some fundamental biochemical functions, it seems that selenium has a precise role in reducing the radical concentrations in vitro and in vivo. Selenium is distributed in an uneven manner in foods and its concentration is very low in vegetables (from 0,010 to 0,020µg/g) and fruits (from 0,002 to 0,018µg/g), while it is present in meat (from 0,05 to 0,13µg/g), grains (from 0,10 to 0,35µg/g) and particularly in fish and shellfish (from 0,15 to 1,4µg/g). Therefore the greater bio-integration of selenium forms present in plants, that are widely and extensively consumed, makes desirable to increase the small selenium quantities present thereof.

Micro-nutrients malnutrition leads to a spiral of increased disease susceptibility, disability and vital protection loss that leads to death (WHO, in the 2002 World Health Reports).

Among the 50 nutrients to be taken in adequate doses according to Welch and Graham (Field Crops Res 1999.60, p.1-10) and in particular between the micro-nutrient other selenium also lithium is included as well.

Modern agriculture can contribute to increase micro-nutrients in foods through the fertilization agronomic practice.

The lithium should be taken from 0,60 to 3,1mg in daily diet. This absorption depends on the production place of plant and on the food type consumed over a long time.

The lithium is located in the soil at a concentration of 0,0065%, in flowing waters and minerals.

The lithium concentration knowledge in different foods is low, and highly variable depending on the nature and geology of the soil, it is more present in animal products (meat, milk, eggs) and in smaller quantities in tomatoes, mushrooms and potatoes.

The lithium is present in mineral waters in the order of mg/l, or rarely of some tens of mg/l and at least for certain areas, in smaller contents in drinking water.

Nowadays worldwide research recommends lithium as micro-element because it is considered important for individual mental state and good humour and is also known to be antidepressant.

It has been shown that the places with the highest lithium concentration in drinking water tend to have lower individual depression rates and to develop less mental illnesses related to the brain cells degeneration.

Recently it has been discovered that human mortality rate is significantly lower in the municipalities where the drinking water contains more lithium.

Prof. Michael Ristow of Friedrich Schiller University in Jena confirmed in 2010, with research in collaboration with the Oita and Hiroshima University, that a small lithium concentration in the body seems to guarantee a longer life expectancy as found in an animal study model, the nematode "Caenorhabditis elegans" grown under the same low lithium concentrations.

Kinraide Thomas B. et al. "Interactive intoxicating and ameliorating effects of tannic acid, aluminum (Al3+), copper (Cu2+), and selenate (SeO42-) in wheat roots: a descriptive and mathematical assessment", ; & PHYSIOLOGIA PLANTARUM,vol. 139, no. 1, May 2010 (2010-05), pages 68-79, discloses the tannic acid and selenium interaction in the elongation of root in wheat seedlings. In particular it defines a symbiotic interaction between selenium and tannic acid at certain concentration level. In any case the addition of selenium and tannic acid inhibits the root elongation.

CH 694 263 A5 discloses a fertilizer for mushrooms intended to increase the lithium content of the mushrooms. The lithium can be sprayed in solution of lithium carbonate with a dose of 9 g/m².

FR 2 904 184 A1 discloses a process to enrich plants in selenium by foliar application of fertilizer containing selenium and spraying of said fertilizer to achieve a spraying of 5 g / Se /ha, which means a concentration of the fertilizer of 1000 ppm of selenium. To enhance the selenium absorption, the fertilizer comprises solvents ranging from 0,005% to 25% of the liquid phase chosen among dimethylsulfoxide, ethylene, propylene, polyethylene, hexylene, butylic glycols, 1-2 propylene glycol, doethylene glycol, esthers of glycols and poliglycols with methyl, ethyl, propyl, butyl alcohol and other glycols until a molecular weight of 20.000, polyglycols and polyoxyethylene glycols until a molecular weight of 20.000 each.

EP 1 153 901 A2 discloses a liquid fertilizer comprising 0.005
mg to 20 g of selenium / litre to increase the vegetable nutritional quality, the adjuvant used are humic and fulvic acids, water.

Methods for increasing selenium in vegetables have been proposed in form of soil fertilization, and more rarely in form of foliar fertilization (tea, chicory, corn, potato).

The lithium administration to plants, in order to increase its content, has not been proposed for any plant species.

Lithium and selenium co-administration by foliar way in plants to improve the nutritional quality and that of processed products obtained is not yet known.

In particular, it has never been proposed the joint administration of such micro-elements to a vegetable in order to assimilate them and to transfer to the edible portions (fruits, berries, tubers, kernels) and their processed products in varied proportions depending on the particular food obtained so as to satisfy defined nutritional requirements, or to obtain specific functionality in good health promoting.

To fully obtain these purposes it is considered convenient to use aqueous solutions of foregoing lithium and selenium salts, to sprinkle them over leaves, roots or parts of plants.

The sprinkling as foliar fertilization is a more effective method than the soil fertilization, because it uses smaller fertilizer quantities.

It's already well known as use and it better responds to specific consumer group nutritional needs and allows a more effective control of the plant and their edible portions.

### Disclosure of Invention

The main object of the present invention is to propose a chemical composition able to increase jointly the lithium and selenium content in fruit crops, in vegetable crops also in open fields, and industrial cereals crops, herbs and spices and to obtain also any processed products of their edible portions (drinks, juices, vinegars, preserves, extracts), enriched with said micro-elements having functional value.

Important object of the invention is also to provide a composition which, in addition to containing lithium ions and selenium salts, also contains adjuvants components belonging to one of three different chemical species, and/or mixtures thereof, on one side compatible with the vegetable fertilization suitable for obtaining edible products defined biological or organic, and also able to improve the plant absorption rates of both sprinkled elements to obtain absorption rates greater than by spraying the plant with only aqueous solution, and therefore to reduce the absolute used salts contents, at the same concentration of mineral element obtained per vegetable weight unit.

Further object is to use a chemical composition in which the adjuvants components are natural origin compounds and with healthy potential valence for plant, and not produced by organic chemistry synthesis as occurs instead for other foliar fertilizer formulas or less found in patent literature, instead containing solvents such as dimethylsulfoxide, surfactants, polymers, chelating agents, obtained by chemical synthesis.

Desirable object, especially in certain short harvest cycle crops, it is to accelerate the lithium and selenium ions increasing in vegetables, improving the absorption kinetics with potential process accelerators, such as ascorbic acid in the invention composition, preferably in form of salified anion at pH from 7 to 9,0 with different alkaline cations and/or magnesium and/or zinc.

Further object is to propose an economic realization, easy to use and low environmental impacting chemical composition.

Another object of this invention is to achieve through lithium selenium minerals enrichment of the edible portion of the plant kept healthy until harvest and so at the highest appropriate degree, to the maintenance in the processed product (drinks, juices, vinegar, preserved, extracts, etc..) of micro-element enrichment.

It is therefore an object of the present invention a composition consisting of a solution comprising a mixture of aqueous solution with lithium compounds and selenium salts having lithium content from 0,0001 to 15,0g/l (grams per litre) and selenium content from 0,0001 to 12,0g/l with an aqueous solution of at least one among alkaline soap, chitosan hydrolysate with lecithin and/or tannic acid where the elements of the latter solution are assigned to assist the lithium and selenium ions absorption, increasing it and/or making it faster, and wherein the at least an adjuvant is present in the aqueous solution at a minimum concentration of 0,09 g/l and where the composition has a pH ranging from pH 4,5 tp pH 9,0.

### Brief Description of Drawings

The characteristics of the invention are highlighted in the followings with particular reference to the accompanying cartesian diagram drawings showing curves obtained by interpolation of experimental data wherein:

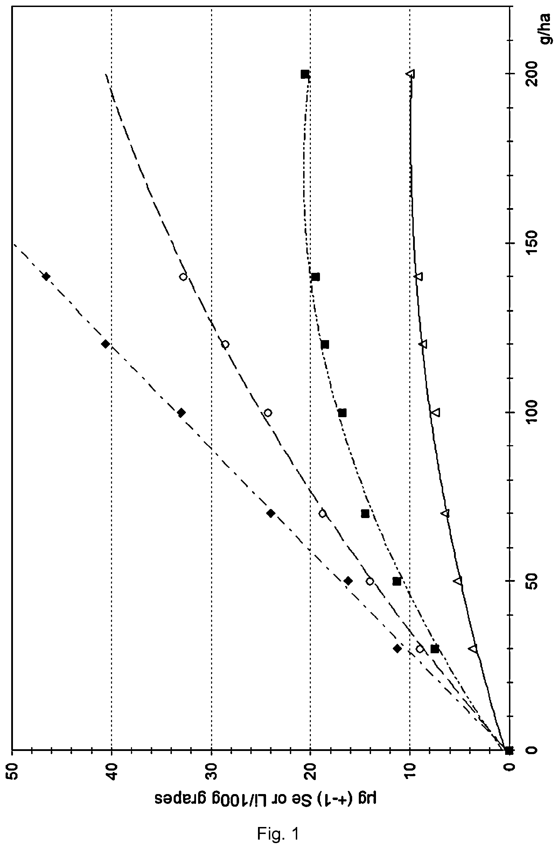

- Fig. 1 shows the effect of associated adjuvants soap and chitosan - lecithin of the present invention composition about the lithium and selenium concentration increase into the vine grapes showed on a cartesian plane whose x-axes refers to the g (grams) of metal given to one hectare of field and y-axes refers to µg (micrograms + or - 1) of selenium or lithium in 100g of vine grapes grown in the field and where:
   the dash-dot line interpolating solid rhomboidal cartesian points represents the lithium concentration in grapes in presence of said adjuvants, the dashed line interpolating circle cartesian points represents the lithium concentration in grapes without adjuvants, the dash-dot-dot line interpolating solid squared cartesian points represents the selenium concentration in grapes in presence of said adjuvants, the continuous line interpolating triangle cartesian points represents the selenium concentration in grapes without said adjuvants and where coordinates of the cartesian points are obtained from on field experimental data.

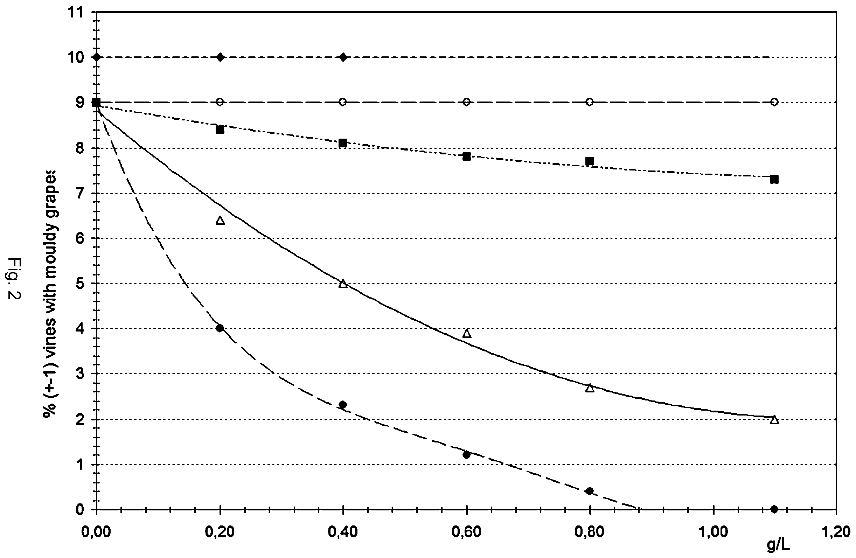

- Fig. 2 shows the reductive effect of associated adjuvants soap and chitosan-lecithin (alone or mixed) of the composition on the percentage of vines with grapes mould affected displayed on a cartesian plane whose x-axes refers to the adjuvants concentration as g/l (grams per litre) into the composition and y-axes refers to the percentage (+ or - 1) of mould affected vine wherein: the horizontal dash-dot line interpolating solid rhomboidal cartesian points represents the affected vines percentage in not treated (absence of composition) vines, the dashed line interpolating circle cartesian points represents the affected vines percentage of lithium and selenium only treated field, the dash-dot-dot line interpolating solid squared cartesian points represents the affected vine percentage of treated field with the composition having soap as adjuvant, the continuous line interpolating triangle cartesian points represents the affected vine percentage treated with the composition having chitosan and lecithin (lecithin about 12% of chitosan) as adjuvants, the dashed line interpolating solid circle cartesian points represents affected vine percentage treated with the composition having soap, chitosan and lecithin as adjuvants and where cartesian points coordinates are obtained from on field experimental data.

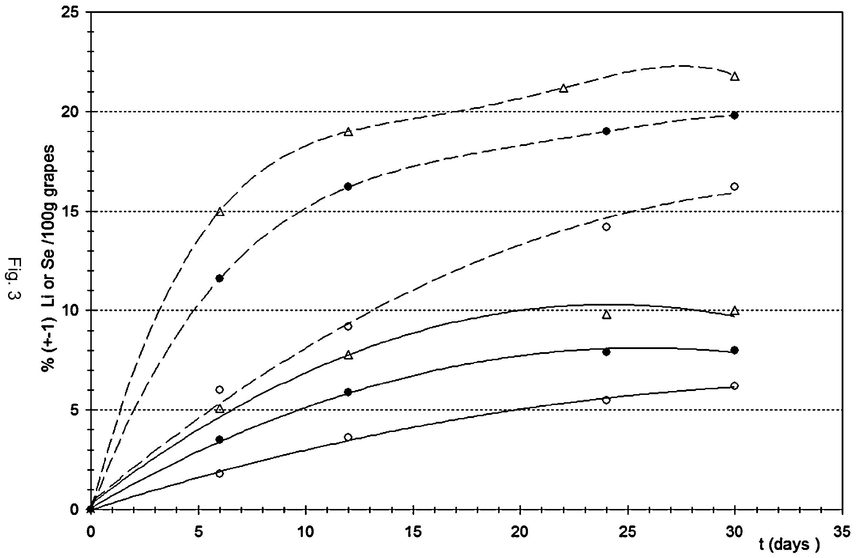

- Fig. 3 shows the effects of the composition comprising lithium, selenium, the above mentioned adjuvants and added with ascorbic acid on the lithium and selenium concentration increasing in the vine grapes displayed on a cartesian plane whose x-axes refers to time (in days after the treatment with 70g/ha of lithium and 70g/ha of selenium per field hectare) and y-axes refers to µg (+ or -1) of lithium or selenium for 100g of vine grapes grown in said field and wherein: the dashed line interpolating triangular cartesian points represents the lithium concentration in grapes when the composition has lithium, said adjuvants and ascorbic acid, the dashed line interpolating solid circle cartesian points represents the lithium concentration in grapes without adjuvants into said composition, the dashed line interpolating circle cartesian points represents the lithium concentration in grapes when the composition comprises lithium and said adjuvants without ascorbic acid, the continuous line interpolating triangular cartesian points represents the selenium concentration in grapes when the composition has selenium, said adjuvants and ascorbic acid, the continuous line interpolating solid circle cartesian points represents the selenium concentration in grapes when the composition comprises selenium, ascorbic acid without adjuvants, the continuous line interpolating circle cartesian points represents the selenium concentration in grapes when the composition comprises lithium and said adjuvants without ascorbic acid.

### Best Mode for Carrying Out the Invention

The composition object of the present invention contains an adjuvant solution containing from 0,09 to 9,0g/l, or more as specified in the following, of an active component selected among alkaline soap (S), chitosan hydrolysate linked to lecithin (CH - Le), or tannic acid (TA), in a volumetric ratio from 1:1 to 250:1 of salt solution to the adjuvant solution.

In the present invention composition the lithium compounds are preferably lithium salts selected among lithium acetate, bromide, carbonate, chloride, sulphate, selenite, selenate, nitrate, formate, citrate, sulfide, selenide and lactate, lithium salts of fatty fats from C4 to C26 saturated or unsaturated with 1-4 double bonds, lithium oxide, lithium hydroxide, litioamide, or metallic lithium in contact with water at room temperature.

The selenium salts are preferably selected among caesium, sodium, lithium, potassium, calcium, magnesium, barium, copper, zinc and ammonium selenites and selenates, which may be obtained from selenium dioxide by reaction with water and subsequent neutralization by means of sodium, potassium or lithium alkali hydroxides.

The adjuvants reference solutions are thus obtained and defined. The adjuvant S solution contains 9g/l of soap and up to 9g/l of citric acid. The soap is lithium, sodium, potassium soap, obtained from a mixture of animal tallow and vegetable oil in a weight ratio of 1:1 wherein the oil can be seed oil and/or olive oil. The solution is obtained by dispersion of soap in drinking water or deionized water at 25°C for sufficient time by stirring, bringing the final pH up to 9,0 with sodium carbonate or potassium or preferably lithium carbonate.

The chitosan hydrolysate solution is obtained dissolving 9,0g of chitosan powder (deacetylation degree about 82%) in 18g of acetic or formic or lactic or citric or malic or tartaric or gluconic or oxalic or hydrochloric or ascorbic or ethylenediaminetetraacetic (EDTA) acid and 0,70l of deionized water or drinking water in glass container at 25°C for one hour of continuous stirring. Then 0,050l of 3% hydrogen peroxide are added to the viscous mass and are maintained under stirring for 72 hours, then is brought up to pH 6 with alkali and is rapidly added 1,2g of soy lecithin dispersed in 8 per thousand aqueous solution. The solution volume is brought up to 1l with deionized water and pH up to 8,0 with alkaline carbonate. The chitosan adjuvant supplemented with lecithin, is constituted of chitosan hydrolysate of oligomers type of less than 10 units of glucosamine and/or acetyl-glucosamine, added with lecithin equal to 13% weight of chitosan and added with lithium alkaline carbonate preferably up to bring the composition at pH of 8,0.

The adjuvant solution TA is obtained by dispersion of 9,0g of high purity degree tannic acid in 1l of drinking water to which up to 2,0g of citric acid and 0,4ml of ethyl citrate are added. The mixture is stirred and the pH is brought up to 7,0 or 7,5 with sodium or lithium carbonate. Each of said chosen adjuvant or their mixture is present in the aqueous solution at a concentration ranging from a minimum of 0,036 to 4,5 g/l in the composition at pH from 4,5 to 9,0.

The solution S is thought to play a role in dispersing the hydrophobic tail of the fatty acids that can coordinate the selenite anion and also bind the lithium cation to the acid negatively load.

The hydrophobic tail can then spread in the waxy lipid surface film of the plant leaf, facilitating the ions passage through the pores of the plant cell membrane.

The chitosan hydrolysate (CH-Le) is constituted by oligomers having different molecular weight of glucosamine and/or acetylglucosamine, which can carry out a transport function for the electrostatic interaction with the selenite; perhaps have stimulating power not known (elicitor) for the enzymes and transport active hormones secretion. The chitosan lecithin oligomers micelles, due to the size of about from 300 to 500 nm, can include the selenite anion and the lithium cation and facilitate its transport across cell membranes thanks to the micelles amphiphilic behaviour. In the invention it is shown that the composition which contains alkaline soap and chitosan lecithin hydrolysate adjuvants increases simultaneously the lithium and selenium content per 100g in the harvest fruit with respect to only the saline solutions, and this occurs for all lithium and selenium ions concentrations per hectare (1 hectare = 1ha = 10000m²) administered to the plant. This is totally unexpected but what is more surprising is the lithium increasing strongest than the selenium increasing, if these increasing as a result of adjuvants in the mixture are expressed on the basis of µg/atom mass per 100g of vegetable. The increasing is much stronger for lithium than for selenium as if lithium interacts more with the adjuvants with respect to selenium, hardly predictable at chemical level (see Fig. 1 and example 5). Moreover, the two adjuvants association showed a protection preventive effect for product enriched (edible part) with respect to mould, significant and synergistic (see Fig. 2 and example 6). The tannic acid (TA), which has a phenolic rings number above and under the glucose molecule as a seat, as well as very soluble, may perhaps have chelating power towards the selenite anion and interact with the many water molecules coordinated to the lithium cation, favouring the membrane transport of both. The chemical species with an accelerating function of the lithium and selenium absorption kinetics by the plant has been unexpectedly detected in acid ascorbic, but for reasons of chemical stability it is preferably used in the form of lithium, sodium, potassium, magnesium, zinc salts and at pH from 7 to 9, and values ranging from 0,01 to 4,0g/l in the composition. It is assumed that the ascorbate anion acts as "pioneer" for lithium and selenium ion in plant penetration through the membrane by an unknown mechanism. It does not appear that ascorbic acid has been used so far for lithium and selenium administration in plants with such a function. For instance the lithium and selenium ions absorption accelerator in the vegetable is ascorbic acid preferably in form of its lithium, sodium, potassium, magnesium, zinc salts at a composition concentration ranging from 0,001 to 4g/l, at pH from 6,0 to 9,0. For instance the composition can be a mixture of an aqueous solution of lithium and selenium salts with an aqueous solution of chosen adjuvant of 9 g/l concentration, in volumetric ratio from 250:1 to 1:1, with the same adjuvant final concentration in the composition from 0,036 to 4,5g/l with or without the ascorbic acid.

The water of said composition can be distilled, deionized or drinking, and the composition may be administered to the plant in common use fertilizer combination or less such as nitrogen, phosphorus and/or potassium salts and supplements such as, for example, gluconates, EDTA or zinc, iron, copper salts.

The preparation may be sprayed preferably at a pH from 4,5 to 9, at temperatures from 5 to 40°C in the form of small droplets of less than 0,025mm on the plants hypogenous and epigeous apparatus for a content up to 750g of lithium and up to 600g of selenium per hectare, and in particular on the leaves.

Spraying the composition on plants can be repeated several times during the growing season for values from about 400 to about 1000l/ha.

The invention provides the use of the composition to treat vegetable fruit for instance chosen among grapes, pears, apricots, cherries, apples, kiwi, oranges, pomegranates, almonds, hazelnuts, walnuts, plums, figs, olives, lemons, peaches, vegetable species selected from carrots, potatoes, tomatoes, onions, squash, eggplant, broccoli, cauliflower, fennel, mushrooms, garlic, artichokes, asparagus, spinach, lettuce, chicory and generally leafy and pulse vegetables, industrial crops oil selected from olive, sunflower, soy, peanuts, rapeseed and cereals such as wheat, buckwheat, barley, corn, sorghum, oats, rice, herbs like tea, coffee and spices selected from rocket, rosemary, basil, sage, bay leaf, oregano, thyme, ginger, turmeric. It is also provided the use of the composition for the enrichment of lithium and selenium content in the edible portions of vegetables for the production of fermented or not beverages, such as wine, vinegar, balsamic vinegar, fruit juice or conserve, aqueous, oily, hydro alcoholic extracts or oil; and the use of the composition by sprinkling said composition with a lithium content from 0,001 to 750g/ha and selenium from 0,001 to 600g/ha to increase the amount and/or the absorption rate of lithium and selenium in vegetables. The invention furthermore provides the use of the composition, comprising the combination of soap and chitosan-lecithin, to protect the edible portion of the vegetable from the mould attack in the enrichment step until gathering and the use of the composition, comprising the ascorbate anion with or without adjuvant or mixtures thereof, to increase absorption rate by vegetables. Further details become clear from the description of some preferred embodiments of the composition for the treatment according to the present invention and the following are not limiting examples.

### Example 1

Three crops, two of Trebbiano white and Sangiovese black grapevine and cherries are treated by means of spraying aqueous solutions containing 0,10g/l of lithium (50g/ha) and 0,060g/l of selenium (30g/ha).

The treatment is repeated as soon as flowering ends and after 20 days.

At harvest time the treated fruits showed a lithium content of 350 - 330 - 290µg /Kg respectively for the Trebbiano white grapes, Sangiovese black grapes and cherries and higher than 12 - 11 - 9 times with respect to the reference.

The selenium content was 38 - 42 - 36µg /Kg, respectively higher 9,5 - 8,8 - 12 times than the reference.

The treatment with the salts aqueous solution (50l) added with 10l of standard adjuvant S, or CH - Le, or TA solutions has resulted in an increase of the lithium content higher than 1,3 - 1,4 - 1,3 times with respect to the only salts solutions; the selenium content increasing was respectively 1,9 - 2,1 - 1,6 times with respect to the salts solutions.

It's evident an effective role of adjuvants and especially CH-Le and S in increasing absorption rates of both ions and especially selenium, and completely unexpected for those values.

1 kg of cherries obtained by treating plants with the solution of the salts added with adjuvant CH-Le solution in volume ratio of 5:1, harvest and pitted and containing 36µg/kg of selenium and 93µg/kg of lithium, are homogenized, added with 0,10l of 4% pectin solution and then mixing 0,45kg of sucrose. The mass is heated up to 50°C, is stirred and is concentrated in small vacuum boule up to 65 Brix degrees. The obtained jam contained 91µg/Kg of lithium and 32µg/Kg of selenium.

### Example 2

A Gotturnio cultivar grape is treated with an aqueous solution containing 0,05g/l of lithium, as lithium acetate (25g/ha of lithium), and 0,15g/l of selenium (75g/ha), as sodium selenite. The treatment has been repeated at a distance of 20days, and the second at a distance of 50days from the grape harvest.

The berries presented, with respect to the reference, a lithium content of 155µg/Kg that is 6 times higher and 88µg/kg of selenium, 16 times higher. The obtained values with salts solutions added with adjuvants solutions with lithium soap S, or chitosan hydrolysate (CH-Le) or tannic acid (TA) in the ratio 10:1 v/v, were 1,80 - 1,90 - 1,6 times higher for selenium and respectively 1,25 - 1,4 - 1,15 times higher for lithium with respect to the tests without adjuvant.

On a convenient mass of grapes (1t) resulting from the treated plots, was obtained after destalking a value of 168µg/kg of lithium and of 91µg/kg of selenium.

The mass of the stalked grape of 0,96t was divided in half; the first part was subject to the mashing and after the addition of potassium metabisulfite (0,05% w/w) was fermented with yeast for six days until total depletion of sugar and then centrifuged. The must contained 155µg/Kg of lithium and 58µg/Kg of selenium, while the wine had 145µg/Kg of lithium and 28µg/Kg o selenium that is about 7 times the selenium and 5 times the lithium of the reference wine.

The second half of the grape is subjected in sequence to the operations of crushing, extraction of the juice in screw extractor sieve, so as to retain the skins and seeds, venting, flash-pasteurizing, cooling and aseptic packaging.

The grape juice at 23° refractometric degrees contained 150µg/Kg of lithium and 68µg/Kg of selenium.

The loss in selenium is mainly due to the fact that the skins removed contain 132µg/Kg of selenium against the 75µg/Kg of pulp.

The juice has anyway a value of selenium 17 times higher than untreated grape which has 4µg/Kg and a value of lithium 4 times higher than untreated grapes.

Therefore, the effect of foliar fertilization for improving health largely remains even after the technological process both in the case of the grapes processed product to wine and to juice.

The lithium drops very little since it presents no volatility at pH 3,5 of the fruit, instead selenium loss is due to yeast capture and volatility at acidic pH.

### Example 3

Over an extensive onions, carrots and potatoes crops some aqueous solutions of lithium chloride and sodium selenite are applied, containing 0,80g/l of lithium and 0,40g/l of selenium with administration of 500l/ha.

There is an increasing in the concentration expressed as µg/Kg of 16 - 12 - 8 times for lithium and of 14 - 12 - 9 times for the selenium with respect to reference for onions, carrots and potatoes.

If it is used salts aqueous solutions added in volumetric ratio of 20:1 with the solution of S-based adjuvant potassium soap, or adjuvant CH-Le or tannic acid (TA), it can be obtained an increasing of 1,3 - 1,4 - 1,4 times of lithium and 1,8 - 2,0 - 1,6 times of selenium with respect to reference salts aqueous solutions.

The adjuvants minor effect on the lithium absorption is probably due to the fact that lithium is strongly coordinating with water; instead it is unexpected the constant significant increasing of selenium absorption especially with the adjuvants S and CH-Le, which reflects a complex biochemical effect difficult to predict and to understand in its mechanism.

### Example 4

A rocket and a chicory greenhouse production of 1000 m² each, are treated with a lithium nitrate aqueous solution containing 0,06g/l of lithium and sodium selenite containing 0,04g/l of selenium. The first treatment 8 days after germination is repeated after 8 days for the rocket and after 20 days for chicory. The volume of solution sprayed is 400 m³/ha, with a value of 24g/ha of lithium and 16g/ha of selenium.

At harvest, after 25 days for the rocket and after 125 days for the chicory, there is an increasing in the edible part of the lithium content of respectively 4 and 6 times with respect to the reference; the selenium increasing is 3 times for the rocket and 5 times for chicory.

The treatment with the salts aqueous solution added in the volumetric ratio of 40:1 of adjuvants S potassium based soap, or of adjuvant CH-Le, tannic acid TA resulted in an increasing compared to the reference, of 5 - 6 - 5 times for lithium and 8 - 9 - 7 times for selenium in the rocket; 8 - 8 - 7 times for lithium and 9 - 10 - 8 times for selenium in chicory, always referring to the edible part.

Remains the effectiveness of adjuvants and especially for the selenium absorption up to duplicate the result obtained with the only salts solution.

### Example 5

A Salamino black grape cultivar vineyard of 1 ha with 3876 plants/ha is divided into 40 plots, each measuring 250 m2. The plants are spaced each other of 1,1 m along the row of 96 plants, and of 2,4m between each row.

The plots 1 - 3 - 5 - 7 - 9 - 11 are each subjected to spraying with 25l of a lithium and selenium salts aqueous composition at a concentration respectively of 30 - 50 - 70 - 100 - 120 - 140g/l.

The plots 17 - 19 - 21 - 23 - 27 - 29 are sprayed with an equal composition of the salts but also as the first adjuvant containing lithium soap at 0,25g/l and also as another adjuvant the chitosan-lecithin hydrolysate at concentration of 0,40g/l. The treatment was carried out respectively at 75days and the second at 50days before grapes harvest.

Fig.1 shows the µg of lithium and selenium absorbed by 100g of Salamino black grapes with respect to the lithium and selenium concentrations administered per hectare.

It can be note the effect of the 2 adjuvants which determine the simultaneous significant increasing in the percentage quantities of ions absorbed compared to the only salt solutions without adjuvants. There is an increasing almost constant for all doses of about 1,40 times for lithium and completely unexpected of 2,15 times for selenium by effect of adjuvants association, but quite different in profile. The absorption mechanism appears more complex than for selenium whose absorption soon reaches saturation, but for which is more evident even if unexpected to that value the adjuvants role. The lithium absorption is dose-dependent of administered salt as revealed by the almost straight line of the graph and is apparently less affected by adjuvants as if lithium penetrates more due to aspects linked to the concentration increasing than that the interaction with adjuvants.

However, if it is considered the absolute increasing expressed at atomic level, understood as the increasing expressed in µg divided by element atomic weight, the lithium absolute increasing from 0,36 to 2,6µg/atom (from 2,5 to 14µg of percentage increasing), is higher than that of selenium from 0,047 to 0,13µg/atom (from 3,7 to 10µg of percentage increasing). This unexpected result confirms that adjuvants play an important role in increasing the selenium and lithium absorption, with higher selectivity for lithium, although difficult to interpret.

### Example 6

It was investigated whether adjuvants have effect in maintaining the edible product of enriched vegetable healthy during the enrichment phase, and therefore maximize the effect of the invention also in the storage and/or transformation phase.

On 1ha of Salamino vineyard have reserved 16 plots of 500 m² each containing 192 plants, the treatment of spraying with a composition of the same solution of lithium and selenium salts respectively 50g/ha of lithium and 70g/ha of selenium in 1000l, using 50l per plot. A plot was without adjuvants, 5 plots were sprayed with composition at increasing concentrations of 0,20 - 0,40 - 0,60 - 0,80 - 1,10g/l of lithium soap adjuvant, while for other 5 plots the adjuvant was chitosan-lecithin at the same increasing concentrations. Finally, for another 5 plots the two adjuvants were associated in the composition of the lithium and selenium salt solution, each with above mentioned increasing concentrations.

On 5^{th} October and 8^{th} October 2012 rains delayed the harvest up to 16^{th} October. The harvest shown that compared to the reference plot without treatment, showing that about 10% of vines with grapes affected by mold, the plot with the treatment of alone lithium and selenium salts solution had about 9% of vines with some grapes contaminated. In the 5 plots sprayed with the same salt solution added with lithium soap adjuvant at content of 0,20 - 0,40 - 0,60 - 0,80 - 1,10g/l, it is noted a slight decreasing of the vines contaminated that reduced to about 7% and going down instead to 2% if it is present in the composition only chitosan-lecithin adjuvant. The association of the two adjuvants in equal concentration and increasing for the 5 plots from 0.40g/l to 2,20g/l of total content of adjuvant, showed absence of contamination of the vines for the plot with value equal to the sum of adjuvants of 0,80g/l and also a discrete synergistic effect of adjuvants.

Therefore, the use of only chitosan-lecithin adjuvant and in combination with the soap adjuvant shows, during the lithium and selenium increasing phase, a significant preventive effect in order of the integer maintaining the edible part of the plant susceptible for processing, and maximizes the content of lithium and selenium enriched obtainable product.

### Example 7

On 4 plots of 250 m² each planted with Salamino black grape with 192 plants per plot proceed spraying with 25l of a composition containing 0,70g/l of lithium and 0,70g/l of selenium and potassium ascorbate in 1,5g/l, at pH of 8,3 of the composition. On other 4 plots of 250 m² it is sprinkled the composition described but which also contains the two adjuvants soap and chitosan - lecithin hydrolysate each at a concentration of 0,20g/l.

At four determined times representative samples of grapes are taken, equivalent to about 1% of weight of the total grape plot, on which are performed analysis of lithium and selenium in comparison with samples of grape vines plot not treated with the solution containing the potassium ascorbate. Is denoted by t/2 the time for which it reaches in the vegetable concentration equal to half the maximum concentration reached at the final plateau in long times. It is noted from the graph of Fig. 3 an increasing of absorption rate more marked for lithium with a t/2 of about 5 days to obtain the plateau for lithium in the presence of ascorbic acid accelerator against the 12 days of lithium of the alone salts composition, while for the selenium t/2 is 7 and 10 days respectively with and without the accelerant. In the presence of ascorbic acid and the two adjuvants the value of t/2 is 3,5 days for the lithium and 6 days for the selenium. It also highlights (see Fig. 3) a small effect of ascorbate on increased absorption rate of lithium and selenium. It has therefore about a halving of the time needed to reach a preset value of the lithium and selenium concentration in vegetable, especially useful for plant varieties in short development cycle such as those grown in the greenhouse.

## Claims

1. Composition for increasing lithium and selenium content in vegetables and their biotechnologically or technologically processed products **characterized in** comprising an aqueous solution mixture of lithium compounds and of selenium salts with a lithium content ranging from 0,0001 to 15,0 g/l and selenium content ranging from 0,0001 to 12,0 g/l and at least an adjuvant selected among at least an alkaline soap, a chitosan-lecithin hydrolysate, a tannic acid and/or a mixture thereof wherein the at least an adjuvant is assigned to increase the lithium and/or selenium ion absorption where each chosen adjuvant is present in the aqueous solution at a minimum concentration of 0,09 g/l.

2. Composition according to claim 1 **characterized in that** the aqueous solution comprises an alkaline soap and the chitosan hydrolysate added with lecithin (CH-Le), as adjuvant.

3. Composition according to claim 1 or 2 **characterized in that** each selected adjuvant is present in the aqueous solution at a concentration ranging from 0,09 to 9,0 g/l at a composition pH ranging from 4,5 to 9,0.

4. Composition according to any of the previous claims **characterized in that** said lithium compounds are lithium salts selected among acetate, bromide, carbonate, chloride, sulphate, selenite, selenate, nitrate, formate, citrate, lactate, sulfide, selenide of lithium salts, and/or lithium salts of saturated or unsaturated fatty acids from C4 to C26 with 1-4 double bonds, or lithium oxide, lithium hydroxide, amide lithium, and metallic lithium put in contact with water at room temperature alone or mixed thereof and/or said selenium salts are selected among lithium, ammonium, sodium, potassium, calcium, caesium, magnesium, copper, zinc, barium selenites and selenates alone or mixture thereof.

5. Composition according to any of the previous claims **characterized in that** the adjuvant is soap of lithium, of sodium, of potassium, of magnesium alone or mixed thereof where the adjuvant in soap form can be obtained from a mixture of animal tallow and vegetable oil in a weight ratio 1:1 bringing the final pH up to 9,0 with sodium carbonate or potassium or preferably lithium carbonate.

6. Composition according to claim 2 **characterized in that** the chitosan adjuvant added with lecithin is constituted of chitosan hydrolysate oligomers of glucosamine and/or of acetyl-glucosamine, added with lecithin equal to about 13% weight of chitosan and added with alkaline carbonate up to bring the composition at pH of 8,0.

7. Composition according to claim 1 **characterized in** being a mixture of an aqueous solution of lithium and selenium salts with an aqueous solution of adjuvant chosen from 0,09 to 9 g/l concentration, in volumetric ratio ranging from 250:1 to 1:1.

8. Composition according to any of the previous claims **characterized in** further comprising an absorption accelerator of said lithium and selenium ion identified as ascorbic acid where the lithium and selenium ions absorption accelerator of the vegetable can be ascorbic acid preferably in form of its lithium, sodium, potassium, magnesium, zinc salts at a composition concentration from 0,01 to 4 g/l, at pH from 7,0 to 9,0.

9. Composition according to any of the previous claims **characterized in** having a pH ranging from 4,5 to 9,0.

10. Use of the composition according any claims from 1 to 7 **characterized in** sprinkling vegetables or fields with the composition to increase lithium and selenium content and/or to improve their absorption rate and to transfer all or a part of such enrichment from edible portions, consisting of berries, fruits, olives, tubers, leaves, bulbs, to their products of biochemical, fermenting and/or technological processing.

11. Use according the claim 10 **characterized in** using the composition to treat vegetable fruit selected among grapes, pears, apricots, cherries, apples, kiwi, oranges, pomegranates, almonds, hazelnuts, plums, figs, olives, lemons, peaches, vegetable species selected from carrots, potatoes, tomatoes, onions, squash, eggplant, broccoli, cauliflower, fennel, mushrooms, garlic, artichokes, asparagus, spinach, lettuce, chicory and generally leafy vegetables, industrial crops oil selected among olive, sunflower, rapeseed and cereals, such as wheat, barley, corn, sorghum, oats, rice, herbs and spices selected among salad rocket, rosemary, basil, sage, bay leaf, oregano, thyme, ginger, turmeric and/or using the composition for the enrichment of lithium and selenium in the edible portions of vegetables for the production of fermented or not beverages, such as wine, vinegar, balsamic vinegar, fruit juice or conserve, aqueous, oily, hydro alcoholic extracts or oil.

12. Use according the claim 10 **characterized in** using the composition at a pH ranging from 4,5 to 9,0 by vegetables foliar sprinkling.

13. Use according the claim 10 **characterized in** sprinkling the composition with a lithium content up to 750 g/ha and selenium up to 600 g/ha to increase the content and/or the absorption rate of lithium and/or of selenium in vegetables and/or sprinkling the composition directly over the vegetable products after their gathering at least for enriching with lithium and selenium.

14. Use according the claim 10 **characterized in** using the composition comprising the combination of soap with chitosan-lecithin to protect the edible portion of the vegetable from the mould attack in the enrichment step until harvesting.

15. Use according the claim 10 **characterized in** using the composition comprising the ascorbate anion with or without adjuvant or mixtures thereof to increase absorption rate by vegetables.

## Patentansprüche

1. Zusammensetzung zum Erhöhen eines Lithium- und Selengehalts in Pflanzen und deren biotechnologisch oder technologisch verarbeiteten Produkten, **dadurch gekennzeichnet, dass** sie eine wässrige Lösung einer Mischung aus Lithiumverbindungen und Selensalzen aufweist, mit einem Lithiumgehalt im Bereich von 0,0001 bis 15,0 g/l und einem Selengehalt im Bereich von 0,0001 bis 12,0 g/l sowie mindestens einem Hilfsmittel, das ausgewählt ist aus mindestens einer alkalischen Seife, einem Chitosan-Lecithin-Hydrolysat, einer Tanninsäure und/oder einer Mischung davon, wobei das mindestens eine Hilfsmittel zugeordnet ist, um die Lithium- und/oder Selen-Ionen-Absorption zu erhöhen, wobei jedes ausgewählte Hilfsmittel in der wässrigen Lösung in einer Mindestkonzentration von 0,09 g/l vorhanden ist.

2. Zusammensetzung gemäß Anspruch 1, **dadurch gekennzeichnet, dass** die wässrige Lösung eine alkalische Seife und das Chitosan-Hydrolysat mit Zusatz von Lecithin (CH-Le) als Hilfsmittel aufweist.

3. Zusammensetzung gemäß Anspruch 1 oder 2, **dadurch gekennzeichnet, dass** jedes ausgewählte Hilfsmittel in der wässrigen Lösung in einer Konzentration im Bereich von 0,09 bis 9,0 g/l bei einem pH-Wert der Zusammensetzung im Bereich von 4,5 bis 9,0 vorhanden ist.

4. Zusammensetzung gemäß einem der vorhergehenden Ansprüche, **dadurch gekennzeichnet, dass** die Lithiumverbindungen sind: Lithiumsalze, die ausgewählt sind aus Acetat, Bromid, Carbonat, Chlorid, Sulfat, Selenit, Selenat, Nitrat, Formiat, Citrat, Lactat, Sulfid, Selenid von Lithiumsalzen und/ oder Lithiumsalze von gesättigten oder ungesättigten Fettsäuren von C4 bis C26 mit 1-4 Doppelbindungen, oder Lithiumoxide, Lithiumhydroxide, Lithiumamid und metallisches Lithium, das bei Raumtemperatur in Kontakt mit Wasser gebracht wird, alleine oder Mischungen davon und/oder die Selensalze sind ausgewählt aus Lithium, Ammonium, Natrium, Kalium, Calzium, Cäsium, Magnesium, Kupfer, Zink, Barium-Seleniten und Selenaten alleine oder Mischungen davon.

5. Zusammensetzung gemäß einem der vorhergehenden Ansprüche, **dadurch gekennzeichnet, dass** das Hilfsmittel Seife aus Lithium, Natrium, Kalium oder Magnesium alleine oder als Mischung davon besteht, wobei das Hilfsmittel in Seifenform erhalten werden kann durch eine Mischung von Tiertalg und Pflanzenöl in einem Gewichtsverhältnis von 1:1, wobei der endgültige pH-Wert auf bis zu 9,0 gebracht wird mit Natrium-Carbonat oder Kalium oder vorzugsweise Lithium-Carbonat.

6. Zusammensetzung gemäß Anspruch 2, **dadurch gekennzeichnet, dass** das Chitosan-Hilfsmittel mit Zusatz von Lecithin aus Chitosan-Hydrolysat-Oligomeren von Glucosamin und/oder Acetyl-Glucosamin besteht, mit Zusatz von Lecithin gleich zu ungefähr 13 Gewichtsprozent Chitosan und mit Zusatz von alkalischem Carbonat, um die Zusammensetzung auf einen pH-Wert von 8,0 zu bringen.

7. Zusammensetzung gemäß Anspruch 1, **dadurch gekennzeichnet, dass** sie eine Mischung einer wässrigen Lösung aus Lithium- und Selensalzen mit einer wässrigen Lösung aus Hilfsmittel ist, das ausgewählt wurde aus einer 0,09 bis 9 g/l - Konzentration, in einem volumetrischen Verhältnis im Bereich von 250:1 bis 1:1.

8. Zusammensetzung gemäß einem der vorhergehenden Ansprüche, **dadurch gekennzeichnet, dass** sie weiterhin einen Absorptionsbeschleuniger der Lithium- und Selen-Ionen umfasst, der identifiziert ist als Ascorbinsäure, wobei der Lithium- und Selen-Ionen-Absorptionsbeschleuniger der Pflanze Ascorbinsäure sein kann, vorzugsweise in Form ihrer Lithium, Natrium, Kalium, Magnesium, Zinksalze bei einer Konzentration der Zusammensetzung von 0,01 bis 4 g/l, bei einem pH-Wert von 7,0 bis 9,0.

9. Zusammensetzung gemäß einem der vorhergehenden Ansprüche, **dadurch gekennzeichnet, dass** sie einen pH-Wert im Bereich von 4,5 bis 9,0 aufweist.

10. Verwendung der Zusammensetzung gemäß einem der Ansprüche 1 bis 7, **dadurch gekennzeichnet, dass** Pflanzen oder Felder mit der Zusammensetzung besprüht werden, um den Lithium- und Selengehalt zu erhöhen und/oder deren Absorptionsrate zu verbessern und alle oder einen Teil von solchen Anreicherungen von essbaren Bestandteilen, bestehend aus Beeren, Früchten, Oliven, Knollen, Blättern, Zwiebeln, auf deren Produkte der biochemischen, fermentierenden und/oder technologischen Verarbeitung zu übertragen.

11. Verwendung gemäß Anspruch 10, **gekennzeichnet durch** ein Verwenden der Zusammensetzung, um zu behandeln: Pflanzenfrüchte, die ausgewählt wurden aus Weintrauben, Birnen, Aprikosen, Kirschen, Äpfeln, Kiwis, Orangen, Granatäpfeln, Mandeln, Haselnüssen, Pflaumen, Feigen, Oliven, Limonen, Pfirsichen,
Pflanzenarten, die ausgewählt wurden aus Karotten, Kartoffeln, Tomaten, Zwiebeln, Speisekürbis, Aubergine, Brokkoli, Blumenkohl, Fenchel, Pilzen, Knoblauch, Artischocken, Spargel, Spinat, Kopfsalat, Chicoree, und allgemein Blattpflanzen,
industrielles Feldfrüchteöl ausgewählt aus Oliven-, Sonnenblumen-, Rapsöl, und
Cerealien wie beispielsweise Weizen, Gerste, Mais, Sorghumhirse, Hafer, Reis,
Kräuter und Gewürze ausgewählt aus Rucola, Rosmarin, Basilikum, Salbei, Lorbeer, Oregano, Thymian, Ingwer, Kurkuma und/oder
Verwenden der Zusammensetzung für die Anreichung von Lithium und Selen in den essbaren Bestandteilen von Pflanzen für die Produktion von fermentierten Getränken oder Nicht-Getränken wie beispielsweise Wein, Essig, Balsamico-Essig, Fruchtsaft oder Konserven, wässrige, ölige, hydroalkoholische Extrakte oder Öle.

12. Verwendung gemäß Anspruch 10, **gekennzeichnet durch** ein Verwenden der Zusammensetzung bei einem pH-Wert im Bereich von 4,5 bis 9,0 **durch** Besprühen der Pflanzenblätter.

13. Verwendung gemäß Anspruch 10, **gekennzeichnet durch** ein Sprühen der Zusammensetzung mit einem Lithiumgehalt bis zu 750 Gramm pro Hektar und Selen bis zu 600 Gramm pro Hektar, um den Gehalt und/oder die Absorptionsrate von Lithium und/oder Selen in Pflanzen zu erhöhen und/oder Sprühen der Zusammensetzung direkt über die Pflanzenprodukte nach dem Sammeln mindestens zum Anreichern mit Lithium und Selen.

14. Verwendung gemäß Anspruch 10, **gekennzeichnet durch** ein Verwenden der Zusammensetzung umfassend die Kombination von Seife mit Chitosan-Lecithin, um den essbaren Bestandteil der Pflanze vor der Schimmelpilzattacke in dem Anreicherungsschritt bis zur Ernte zu schützen.

15. Verwendung gemäß Anspruch 10, **gekennzeichnet durch** ein Verwenden der Zusammensetzung umfassend das Ascorbin-Anion mit oder ohne Hilfsmittel oder Mischungen davon, um die Absorptionsrate **durch** Pflanzen zu erhöhen.

## Revendications

1. Composition pour augmenter la teneur en lithium et en sélénium dans les légumes et leurs produits de traitement biotechnologique ou technologique, **caractérisée par** le fait qu'elle comprend un mélange en solution aqueuse de composés du lithium et de sels du sélénium avec une teneur en lithium se situant dans la plage de 0,0001 à 15,0 g/l et une teneur en sélénium se situant dans la plage de 0,0001 à 12,0 g/l et au moins un adjuvant choisi parmi au moins un savon alcalin, un hydrolysat de chitosane-lécithine, un acide tannique et/ou un mélange de ceux-ci, le au moins un adjuvant étant destiné à augmenter l'absorption des ions lithium et/ou sélénium où chaque adjuvant choisi est présent dans la solution aqueuse à une concentration minimale de 0,09 g/l.

2. Composition selon la revendication 1, **caractérisée par le fait que** la solution aqueuse comprend un savon alcalin et l'hydrolysat de chitosane additionné de lécithine (CH-Le) comme adjuvant.

3. Composition selon l'une des revendications 1 ou 2, **caractérisée par le fait que** chaque adjuvant choisi est présent dans la solution aqueuse à une concentration se situant dans la plage de 0,09 à 9,0 g/l à un pH de composition se situant dans la plage de 4,5 à 9,0.

4. Composition selon l'une quelconque des revendications précédentes, **caractérisée par le fait que** lesdits composés du lithium sont des sels de lithium choisis parmi les sels acétate, bromure, carbonate, chlorure, sulfate, sélénite, séléniate, nitrate, formiate, citrate, lactate, sulfure, séléniure de lithium, et/ou des sels de lithium d'acides gras saturés ou insaturés de C4 à C26 avec 1-4 doubles liaisons, ou l'oxyde de lithium, l'hydroxyde de lithium, l'amide de lithium et le lithium métallique mis en contact avec de l'eau à la température ambiante, individuellement ou en mélange, et/ou lesdits sels de sélénium sont choisis parmi les sélénites et séléniates de lithium, d'ammonium, de sodium, de potassium, de calcium, de césium, de magnésium, de cuivre, de zinc, de baryum, individuellement ou en mélange.

5. Composition selon l'une quelconque des revendications précédentes, **caractérisée par le fait que** l'adjuvant est un savon de lithium, de sodium, de potassium, de magnésium, individuellement ou en mélange, où l'adjuvant dans la forme de savon peut être obtenu à partir d'un mélange de suif animal et d'huile végétale dans un rapport en poids de 1:1, en amenant le pH final jusqu'à 9,0 avec du carbonate de sodium ou du carbonate de potassium ou de préférence de lithium.

6. Composition selon la revendication 2, **caractérisée par le fait que** l'adjuvant chitosane additionné de lécithine est constitué d'oligomères d'hydrolysat de chitosane de glucosamine et/ou d'acétyl-glucosamine, additionnés de lécithine dans une quantité égale à environ 13 % en poids de chitosane et additionnés de carbonate alcalin jusqu'à amener la composition à un pH de 8,0.

7. Composition selon la revendication 1, **caractérisée par** le fait qu'elle est un mélange d'une solution aqueuse de sels de lithium et de sélénium avec une solution aqueuse d'adjuvant choisi parmi 0,09 à 9 g/l de concentration, dans un rapport volumétrique se situant dans la plage de 250:1 à 1:1.

8. Composition selon l'une quelconque des revendications précédentes, **caractérisée par** le fait qu'elle comprend en outre un accélérateur d'absorption desdits ions lithium et sélénium identifié comme acide ascorbique où l'accélérateur d'absorption des ions lithium et sélénium des légumes peut être de l'acide ascorbique de préférence sous la forme de ses sels de lithium, de sodium, de potassium, de magnésium, de zinc, à une concentration de composition de 0,01 à 4 g/l, à un pH de 7,0 à 9,0.

9. Composition selon l'une quelconque des revendications précédentes, **caractérisée par** le fait qu'elle a un pH se situant dans la plage de 4,5 à 9,0.

10. Utilisation de la composition selon l'une quelconque des revendications 1 à 7, **caractérisée par** l'arrosage par aspersion des légumes ou des champs avec la composition pour augmenter la teneur en lithium et sélénium et/ou pour améliorer leur vitesse d'absorption et pour transférer la totalité ou une partie d'un tel enrichissement des parties comestibles, consistant en baies, fruits, olives, tubercules, feuilles, bulbes, à leurs produits de traitement biochimique, de fermentation et/ou technologique.

11. Utilisation selon la revendication 10, **caractérisée par** l'utilisation de la composition pour traiter des fruits et légumes choisis parmi les raisins, les poires, les abricots, les cerises, les pommes, les kiwis, les oranges, les grenades, les amandes, les noisettes, les prunes, les figues, les olives, les citrons, les pêches, les espèces végétales choisies parmi les carottes, les pommes de terre, les tomates, les oignons, les courges, les aubergines, les brocolis, les choux-fleurs, le fenouil, les champignons, l'ail, les artichauts, les asperges, les épinards, les laitues, la chicorée et de manière générale les légumes à feuilles, l'huile de récoltes industrielle choisie parmi les huiles d'olive, de tournesol, de colza et de céréales, telles que le blé, l'orge, le maïs, le sorgho, l'avoine, le riz, les herbes et épices choisies parmi la salade roquette, le romarin, le basilic, la sauge, les feuilles de laurier, l'origan, le thym, le gingembre, le curcuma et/ou par l'utilisation de la composition pour l'enrichissement de lithium et de sélénium dans les parties comestibles de légumes pour la production de boissons fermentées ou non, telles que le vin, le vinaigre, le vinaigre balsamique, le jus ou la conserve de fruit, les extraits aqueux, huileux ou hydro-alcooliques ou l'huile.

12. Utilisation selon la revendication 10, **caractérisée par** l'utilisation de la composition à un pH se situant dans la plage de 4,5 à 9,0 par arrosage par aspersion foliaire des légumes.

13. Utilisation selon la revendication 10, **caractérisée par** l'arrosage par aspersion de la composition avec une teneur en lithium allant jusqu'à 750 g/ha et en sélénium jusqu'à 600 g/ha pour augmenter la teneur et/ou la vitesse d'absorption de lithium et/ou de sélénium dans les légumes et/ou l'arrosage par aspersion de la composition directement sur les produits de légumes après leur ramassage au moins pour enrichir en lithium et sélénium.

14. Utilisation selon la revendication 10, **caractérisée par** l'utilisation de la composition comprenant la combinaison de savon avec du chitosane-lécithine pour protéger la partie comestible du légume de l'attaque par les moisissures dans l'étape d'enrichissement jusqu'à la récolte.

15. Utilisation selon la revendication 10, **caractérisée par** l'utilisation de la composition comprenant l'anion ascorbate avec ou sans adjuvant ou mélanges de ceux-ci pour augmenter la vitesse d'absorption par les légumes.
